# DEMANDE DE BREVET EUROPEEN

(11) **EP 1 508 927 A2**
(43) Date de publication de la demande: **23.02.2005**
(21) Numéro de dépôt: 04291665.0
(22) Date de dépôt: 01.07.2004
(51) Int. Cl.: H01M 4/02, H01M 4/62, C09J 127/16

(54) **Structure comprenant un polymere fluore modifie et electrode a base de cette structure**

(30) Priorité: 29.07.2003 FR 0309298
(71) Demandeur: ARKEMA, 92800 Puteaux (FR)
(72) Inventeur: Bonnet, Anthony, 27170 Beaumont Le Roger (FR); Ramfel, Barbara, 91310 Longpont Sur Orge (FR); Barriere, Benoît, 27170 Le Tilleul Othon (FR); Pascal, Thierry, 69390 Charly (FR)
(74) Mandataire: Neel, Henry

(57) **Abrégé**

La présente invention concerne une structure comprenant successivement :
- une couche d'un métal L1, éventuellement un primaire fluoré L2 qui est un mélange comprenant en poids 1 à 100% d'au moins un polymère fluoré modifié pour respectivement 0 à 99% de polymère fluoré, et une couche d'un polymère fluoré L3,
- telle que si la couche de primaire L2 est absente alors le polymère fluoré L3 est un mélange comprenant en poids 1 à 100% d'au moins un polymère fluoré modifié pour respectivement 0 à 99% de polymère fluoré,
- ledit polymère fluoré modifié étant choisi parmi :
   o les polymères fluorés greffés par un monomère insaturé, le greffage étant effectué en l'absence d'oxygène par irradiation du monomère insaturé et du polymère fluoré préalablement mélangés à l'état fondu,
   o les polymères fluorés irradiés en présence d'oxygène (aussi désignés par polymères fluorés oxydés).

Selon une forme particulière la structure de l'invention est une électrode d'une batterie lithium-ion dans laquelle le métal L1 est le collecteur et le polymère fluoré L3, fortement chargé de carbone et/ou d'oxydes, en est la couche électroactive.

## Description

### [Domaine de l'invention]

La présente invention concerne une structure comprenant un polymère fluoré modifié et une électrode à base de cette structure. Plus précisément la structure comprend successivement une couche d'un métal, éventuellement un primaire fluoré modifié, une couche d'un polymère fluoré éventuellement modifié et telle que le polymère fluoré d'au moins l'une des couches est un polymère fluoré modifié. C'est à dire que s'il n'y a pas de couche de primaire alors la couche de polymère fluoré est nécessairement en polymère fluoré modifié. La couche de polymère fluoré peut être remplacée par un polymère fluoré fortement chargé de carbone et/ou d'oxydes ainsi elle est une couche électroactive, le polymère fluoré est qualifié dans ce cas de liant, il assure la cohésion de cette couche électroactive. Cette structure comprenant successivement la couche d'un métal, éventuellement le primaire fluoré et cette couche électroactive constitue une électrode d'une batterie lithium-ion.

### [l'art antérieur et le problème technique]

Dans la réalisation des batteries lithium-ion, la couche électroactive contenant soit des charges d'oxydes mixtes soit des charges de carbone et/ou de graphite, avec d'autres ingrédients pour régler les performances électriques, est réalisée en général par dispersion des charges dans un solvant en présence d'un liant polymérique fluoré. La dispersion ainsi obtenue est déposée sur un collecteur métallique par une méthode de "Cast", le solvant est ensuite évaporé pour obtenir une électrode négative ou positive selon les charges utilisées.

Les collecteurs métalliques utilisés sont en général des feuilles ou des grilles de cuivre dans le cas de l'électrode négative et d'aluminium dans le cas de l'électrode positive. Le liant polymérique assure la cohésion de la couche électroactive ainsi que l'adhésion sur le collecteur métallique. Cette cohésion et cette adhésion sont nécessaires pour la bonne réalisation des batteries.

Une mauvaise cohésion de la couche ne permet pas par exemple d'enrouler ou d'empiler les électrodes au sein de la structure multicouche de la batterie sans avoir un effritement préjudiciable du matériau électroactif. Cet inconvénient majeur est produit également lorsque l'adhésion au collecteur est insuffisante.

Les performances de la batterie dépendent étroitement des caractéristiques du liant. Un bon liant permet de réaliser des couches suffisamment chargées en ingrédients électroactifs par rapport à la quantité de liant nécessaire et permet ainsi d'avoir une capacité spécifique élevée. Le liant doit également être stable vis à vis des réactions d'oxydo-réductions lors des cycles de charges et de décharges et doit être également insensible à l'électrolyte présent dans la batterie. Cet électrolyte contient typiquement des solvants de type carbonate comme le carbonate de propylène, d'éthylène, de diméthyle éthyle et un sel de lithium comme LiPF₆ ou LiBF₄.
Le PVDF ou les copolymères du VF₂ sont des matériaux qui possèdent les caractéristiques pour leur utilisation en tant que liants de batterie au lithium.

La demande de brevet **WO 97-27260** décrit une structure comprenant successivement (i) un polymère fluoré, (ii) un adhésif constitué d'un mélange de deux polymères choisis parmi le PVDF homopolymère, un polymère acrylique et un copolymère à base de VF2 (fluorure de vinilydène parfois désigné aussi par VDF) et (iii) une couche métallique. Il décrit aussi des électrodes de batterie lithium-ion constituées d'une couche électroactive dont le liant est de composition (ii) déposée sur une feuille de cuivre ou d'aluminium.

La demande de brevet **WO 97-32347** décrit des électrodes de batterie lithium-ion constituées d'une couche électroactive dont le liant est un polymère fluoré greffé par un polymère acrylique, la dite couche électroactive est déposée sur une feuille de cuivre ou d'aluminium.

Le brevet **EP 1054023** décrit un procédé de modification chimique d'un polymère fluoré consistant à effectuer une déshydrofluoration partielle puis en sa mise en contact avec un agent oxydant, notamment le peroxyde d'hydrogène ou un hypochlorite. Le polymère fluoré résultant a des propriétés d'adhésion très élevées, notamment à des substrats métalliques ou polymériques. Ce polymère fluoré est un liant dans la fabrication d'électrodes de batteries lithium-ion.

Le brevet **EP 1138698** décrit une structure comprenant successivement une couche d'un métal L1, un primaire fluoré L2 et une couche d'un polymère fluoré L3 dans laquelle le primaire fluoré L2 provient d'un polymère fluoré modifié chimiquement par une déshydrofluoration partielle suivie d'une oxydation. Selon une forme particulière cette structure est une électrode d'une batterie lithium-ion dans laquelle le métal L1 est le collecteur et le polymère fluoré L3, fortement chargé de carbone et/ou d'oxydes, en est la couche électroactive.

La demande de brevet **WO 0206355** décrit des mélanges d'un polymère fluoré avec un polymère fluoré modifié chimiquement par une déshydrofluoration partielle suivie d'une oxydation. Ces mélanges sont utilisés dans les structures décrites dans les deux art antérieurs précédents EP 1054023 et EP 1138698 en lieu et place du polymère fluoré modifié chimiquement par une déshydrofluoration partielle suivie d'une oxydation.

Le brevet **EP 0793286** décrit le greffage sur du PVDF de monomères monoinsaturés présentant une fonction -COOH, -SO₂OH, PO(OH)₂, -COOR', -CONH₂. Le greffage est réalisé de préférence par préirradiation du PVDF avant mise en contact avec le monomère. Le PVDF et le monomère monoinsaturé peuvent être irradiés ensemble mais il n'est pas précisé que ces deux éléments ont été mélangés à l'état fondu. Le mode de réalisation préféré est repris dans la publication J. Power Res. **2001,** *97-98,* 664-666.

Le brevet **US 5415958** décrit un copolymère de VF₂ et d'un monomère insaturé présentant des fonctions carbonyles de type acide ou ester utilisable comme liant pour les batteries.

Que ce soit l'adhésion des polymères fluorés sur les métaux ou l'adhésion des couches électroactives à base de polymères fluorés dans les batteries lithium-ion les arts antérieurs précédents antérieurs précédents EP 1054023, EP 1138698 et WO 0206355 ont décrit des solutions satisfaisantes. Cependant la technique de modification du polymère fluoré est compliquée. On a maintenant trouvé qu'un polymère fluoré modifié par irradiation pouvait facilement remplacer le polymère fluoré modifié chimiquement par une déshydrofluoration partielle suivie d'une oxydation qui est décrit dans l'art antérieur. Cette modification par irradiation peut être soit une irradiation en l'absence d'oxygène d'un mélange du polymère fluoré et d'un monomère insaturé soit une irradiation en présence d'oxygène du polymère fluoré seul.

### [Brève description de l'invention]

La présente invention concerne une structure comprenant successivement :
- une couche d'un métal L1, éventuellement un primaire fluoré L2 qui est un mélange comprenant en poids 1 à 100% d'au moins un polymère fluoré modifié pour respectivement 0 à 99% de polymère fluoré, et une couche d'un polymère fluoré L3,
- telle que si la couche de primaire L2 est absente alors le polymère fluoré L3 est un mélange comprenant en poids 1 à 100% d'au moins un polymère fluoré modifié pour respectivement 0 à 99% de polymère fluoré,
- ledit polymère fluoré modifié étant choisi parmi :
   o les polymères fluorés greffés par un monomère insaturé, le greffage étant effectué irradiation du monomère insaturé et du polymère fluoré préalablement mélangés à l'état fondu,
   o les polymères fluorés irradiés en présence d'oxygène (aussi désignés par polymères fluorés oxydés).

C'est à dire que la structure de l'invention peut comprendre la couche L1, le primaire L2 à base de polymère fluoré modifié et la couche L3 en polymère fluoré modifié ou non. Dans cette structure il n'est pas nécessaire que le polymère fluoré de la couche L3 soit modifié, la présence de la couche de primaire L2 est suffisante.

La structure de l'invention peut être aussi sans primaire et comprendre la couche L1 et la couche L3 à base de polymère fluoré modifié.

Selon une forme particulière la structure de l'invention est une électrode d'une batterie lithium-ion dans laquelle le métal L1 est le collecteur et le polymère fluoré L3, fortement chargé de carbone et/ou d'oxydes, en est la couche électroactive.

### [Description détaillée de l'invention]

**S'agissant du métal de la couche L1** on peut citer par exemple l'acier, l'acier inoxydable, l'aluminium, le cuivre, le nickel, le titane, le plomb, l'argent, le chrome et leurs différents alliages. L'épaisseur de cette couche peut être quelconque. Elle peut être par exemple de quelques microns à plusieurs centimètres.

**S'agissant du polymère fluoré** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VDF); le trifluoroéthylène (VF3); le chlorotrifluoroéthylène (CTFE); le 1,2-difluoroéthylène; le tetrafluoroéthylène (TFE); l'hexafluoropropylène (HFP); les perfluoro(alkyl vinyl) éthers tels que le perfluoro(methyl vinyl)éther (PMVE), le perfluoro(ethyl vinyl) éther (PEVE) et le perfluoro(propyl vinyl) éther (PPVE); le perfluoro( 1,3 -dioxole); le perfluoro(2,2-diméthyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogène ou F(CF2)z et z vaut 1, 2, 3 ou 4; le produit de formule R3OCF=CH2 dans laquelle R3 est F(CF2)z- et z est 1, 2, 3 or 4; le perfluorobutyl éthylène (PFBE); le 3,3,3-trifluoropropène et le 2-trifluorométhyl-3 ,3 ,3 -trifluoro- 1 -propène.

Le polymère fluoré peut être un homopolymère ou un copolymère, il peut aussi comprendre des monomères non fluorés tels que l'éthylène.

A titre d'exemple le polymère fluoré est choisi parmi :
- Les homo- et copolymères du fluorure de vinylidène (VDF) contenant de préférence au moins 50% en poids de VDF, le copolymère étant choisi parmi le chlorotrifluoroéthylène (CTFE), l'hexafluoropropylène (HFP), le trifluoroéthylène (VF3) et le tétrafluoroéthylène (TFE),
- les homo- et copolymères du trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF3.

Avantageusement le polymère fluoré est du poly(fluorure de vinylidène) (PVDF) homopolymère ou copolymère. De préférence le PVDF contient, en poids, au moins 50% de VDF, plus préférentiellement au moins 75% et mieux encore au moins 85%. Le comonomère est avantageusement l'HFP.

Le polymère fluoré utilisé dans les couches L2 et L3 et qui n'est pas modifié est choisi parmi les polymères fluorés qu'on vient de citer. Le polymère fluoré non modifié peut être un mélange de polymères fluorés non modifiés. Les polymères fluorés non modifiés des couches L2 et L3 peuvent être identiques ou différents.

**On va décrire maintenant les polymères fluorés modifiés** c'est à dire les polymères fluorés greffés et les polymères fluorés oxydés. Ils sont préparés à partir des polymères fluorés qu'on a décrits plus haut.

**S'agissant des polymères fluorés greffés** on peut les préparer par un procédé de greffage d'un monomère insaturé sur le polymère fluoré dans lequel :
a) on mélange le polymère fluoré à l'état fondu avec le monomère insaturé,
b) le mélange obtenu en a) est mis sous forme de films, de plaques, de granulés ou de poudre,
c) les produits de l'étape b) sont soumis, en l'absence d'oxygène à une irradiation photonique (gamma) ou électronique (béta) sous une dose comprise entre 1 et 15 Mrad,
d) le produit obtenu en c) est éventuellement traité pour éliminer tout ou partie du monomère insaturé qui n'a pas été greffé sur le polymère fluoré.

S'agissant du monomère insaturé de greffage à titre d'exemples, on peut citer ceux possédant une fonction acide carboxylique, dérivé d'acide, chlorure d'acide, isocyanate, oxazoline, époxyde, amine ou hydroxyde.
Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés. On peut encore citer l'acide undécylènique.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4―méthyl-cyclohex-4-ène-1,2-dicarboxylique, bicyclo(2,2,1 )hept-5-ène-2,3-dicarboxylique, x―méthylbicyclo(2,2,1-hept-5-ène-2,3-dicarboxylique, les anhydrides maléique, itaconique, citraconique, allylsuccinique, cyclohex-4-ène-1,2-dicarboxylique, 4―méthylènecyclohex-4-ène-1,2-dicarboxylique, bicyclo(2,2,1)hept-5-ène-2,3-dicarboxylique, et x― méthylbicyclo(2,2,1 )hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N―monoéthytamide maléique, N,N-diéthylamide maléique, N―monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

Avantageusement on utilise l'anhydride maléique.

L'étape a) s'effectue dans tout dispositif de mélange tel que des extrudeuses ou des malaxeurs utilisés dans l'industrie des thermoplastiques.

S'agissant des proportions du polymère fluoré et du monomère insaturé la proportion de polymère fluoré est avantageusement, en poids, de 90 à 99,9% pour respectivement 0,1 à 10% de monomère insaturé. De préférence la proportion de polymère fluoré est de 95 à 99,9% pour respectivement 0,1 à 5% de monomère insaturé.

A l'issue de l'étape a) on constate que le mélange du polymère fluoré et du monomère insaturé a perdu environ de 10 à 50% du monomère insaturé qu'on avait introduit au début de l'étape a). Cette proportion dépend de la volatilité et de la nature du monomère insaturé. En fait le monomère a été dégazé dans l'extrudeuse ou le mélangeur et il est récupéré dans les circuits d'évents.

S'agissant de l'étape c) les produits récupérés à l'issue de l'étape b) sont avantageusement conditionnés en sacs de polyéthylène et l'air est chassé puis ils sont fermés. Quant à la méthode d'irradiation, on pourra utiliser sans distinction l'irradiation électronique plus connue sous la dénomination irradiation béta et l'irradiation photonique plus connue sous la dénomination irradiation gamma. Avantageusement la dose est comprise entre 2 et 6 Mrad (soit 20-60 kGray) et de préférence entre 3 et 5 Mrad (30-50 kGray). Selon la nature de la source d'irradiation, la durée d'irradiation pourra être plus ou moins longue. Ainsi, il est connu que le débit de dose, exprimé en kGray par unité de temps, d'une irradiation béta est supérieur à celui d'une irradiation gamma, ce qui nécessite par conséquent pour l'opération de greffage des durées d'irradiation plus faibles. La durée d'irradiation peut ainsi être comprise entre 1 minute et 40 heures, de préférence entre 1 minute et 20 heures, et de manière encore plus préférée entre 1 minutes et 15 heures.

S'agissant de l'étape d) on peut éliminer par tout moyen le monomère non greffé. La proportion de monomère greffé par rapport au monomère présent au début de l'étape c) est comprise entre 50 et 100%. On peut laver avec des solvants inertes vis à vis du polymère fluoré et des fonctions greffées. Par exemple quand on greffe de l'anhydride maléique on peut laver au chlorobenzène. On peut aussi plus simplement dégazer en mettant sous vide le produit récupéré à l'étape c), éventuellement en chauffant le produit.

**S'agissant des polymères fluorés oxydés**, on peut les préparer par un procédé d'oxydation du polymère fluoré dans lequel :
a) le polymère fluoré est mis sous forme de films, de plaques, de granulés ou de poudre,
b) les produits de l'étape a) sont soumis, en présence d'oxygène, à une irradiation photonique (gamma) ou électronique (béta) sous une dose comprise entre 1 et 15 Mrad,
c) le produit obtenu en b) est éventuellement traité pour éliminer tout ou partie des impuretés sous produites.

S'agissant de l'irradiation et d'abord de l'étape a) les produits sont avantageusement conditionnés en sacs de polyéthylène et les sacs ne sont pas inertés. Avantageusement le polymère fluoré est sous forme de poudre. Les sacs peuvent comprendre aussi une couche d'aluminium en plus de la couche de polyéthylène. Il n'est pas nécessaire d'irradier en présence d'oxygène pur, il suffit que ce soit en présence d'oxygène. On peut irradier en présence d'un gaz inerte contenant de l'oxygène. Le "gaz inerte" désigne un gaz qui n'intervient pas dans la réaction d'irradiation ni la modification du polymère fluoré par l'oxygène. Avantageusement la proportion d'oxygène est comprise entre 1 et 20% en volume pour respectivement 99 à 80% de gaz inerte. Avantageusement on irradie en présence d'air. S'agissant de l'étape b) quant à la méthode d'irradiation, on pourra utiliser sans distinction l'irradiation électronique plus connue sous la dénomination irradiation béta et l'irradiation photonique plus connue sous la dénomination irradiation gamma. Avantageusement la dose est comprise entre 2 et 12 Mrad et de préférence entre 2 et 8 Mrad.

S'agissant de l'étape c) on peut éliminer les impuretés par tout moyen. On peut laver avec des solvants inertes vis à vis du polymère fluoré oxydé. On peut aussi plus simplement dégazer en mettant sous vide le produit récupéré à l'étape b), éventuellement en chauffant le produit.

**S'agissant de la couche L2** le primaire fluoré est avantageusement un mélange comprenant en poids 10 à 90% d'au moins un polymère fluoré modifié pour respectivement 90 à 10% de polymère fluoré. De préférence, c'est un mélange comprenant en poids 15 à 55% d'au moins un polymère fluoré modifié pour respectivement 85 à 45% de polymère fluoré. Le polymère fluoré modifié du mélange peut provenir de la modification d'un polymère fluoré qui n'est pas le même que le polymère fluoré non modifié du mélange. Le polymère fluoré modifié peut être un mélange de polymères fluorés modifiés tel que par exemple un mélange de deux polymères fluorés greffés ou de deux polymères fluorés oxydés ou d'un polymère fluoré greffé et d'un polymère fluoré oxydé. On ne sortirait pas du cadre de l'invention en ajoutant un autre polymère tel que par exemple un polymère acrylique. A titre d'exemple de polymère acrylique on peut citer le PMMA et les modifiants choc de type core shell (coeur écoroe). Cependant pour les structures de type batteries on préfère que le primaire soit constitué essentiellement de polymère fluoré. Le mélarge constituant le primaire peut être préparépar les techniques habituelles de l'industrie des thermoplastiques. Selon la nature physique des constituants on peut les mélanger à sec puis faire fondre le mélange et l'étaler sur L1. On peut aussi dissoudre ce mélange préparé à sec dans un solvant, l'étaler sur L1 puis évaporer le solvant pour constituer une couche de primaire sur L1. On peut aussi mélanger les constituants à l'état fondu et l'étaler de suite sur L1 (par exemple par couchage) ou bien récuperer le mélange sous forme de poudre ou de granulés et ensuite les refondre ou les dissoudre dans un solvant puis opéer comme ci dessus.

La couche L2 des batteries lithium-ion peut comprendre des charges conductrices telles que du noir de carbone pour renforcer sa conductivité.

Le MFI (abréviation de Melt Flow Index ou indice de fluidité à l'état fondu) de L2 est avantageusement compris 0,2 et 15 g/10min (à 230°C sous une charge de 5 kg) pour L2 dérivant du PVDF homopolymère et entre 0,2 et 30 g/10min (à 230°C sous une charge de 5kg) pour L2 dérivant du copolymère de VF2 et d'HFP.

L'épaisseur de la couche de primaire sur le métal L1 peut être comprise entre 1 et 10µm et de préférence 1 et 2 µm pour les électrodes de batteries lithium-ion.

**S'agissant de la couche L3** elle est constituée de polymère fluoré. Il peut être choisi parmi ceux cités plus haut.

Si la couche de primaire est absente la couche L3 contient nécessairement du polymère fluoré modifié. C'est avantageusement un mélange comprenant en poids 10 à 90% d'au moins un polymère fluoré modifié pour respectivement 90 à 10% de polymère fluoré. De préférence c'est un mélange comprenant en poids 15 à 55% d'au moins un polymère fluoré modifié pour respectivement 85 à 45% de polymère fluoré. Le polymère fluoré modifié du mélange peut provenir de la modification d'un polymère fluoré qui n'est pas le même que le polymère fluoré non modifié du mélange. Le polymère fluoré modifié peut être un mélange de polymères fluorés modifiés tel que par exemple un mélange de deux polymères fluorés greffés ou de deux polymères fluorés oxydés ou d'un polymère fluoré greffé et d'un polymère fluoré oxydé.

Que ce soit dans les structures avec primaire L2 ou sans primaire on ne sortirait pas du cadre de l'invention en ajoutant un autre polymère tel que par exemple un polymère acrylique. A titre d'exemple de polymère acrylique on peut citer le PMMA et les modifiants choc de type core shell (coeur écorce). Cependant pour les structures de type batteries on préfère que le polymère soit constitué essentiellement de polymère fluoré. Le mélange peut être préparé selon les mêmes techniques que le primaire.

La couche L3 peut être déposée sur L1 ou sur le primaire selon la structure. Dans les structures comprenant L2 et L3 ces deux couches peuvent être déposées simultanément sur L1 par coextrusion couchage.

Le MVI (MFI en volume) de L3 est avantageusement compris 0,5 et 25 cm3/10min (à 230°C sous une charge de 5 kg).

Selon une forme particulière de l'invention la couche de polymère fluoré L3 peut être fortement chargée de carbone et/ou d'oxydes ainsi elle est une couche électroactive, le polymère fluoré est qualifié dans ce cas de liant, il assure la cohésion de cette couche électroactive. Les couches chargées d'oxydes mixtes de lithium du type LiMₓOy (dans lequel M est un métal de transition comme Mn, Ni, ou Co) ou chargées de carbones de différents types (graphites ou carbones particuliers utilisés en tant que composés d'intercalation des ions lithium) sont utilisées pour la réalisation respectivement des électrodes positives (pour les charges d'oxydes mixtes) et négatives (pour les charges de carbones) dans les batteries lithium-ion.

**Ainsi la présente invention concerne également :**
■ Une électrode positive pour batterie lithium-ion selon la structure précédente dans laquelle le métal L1 est de préférence l'aluminium, le primaire fluoré L2 éventuel est un mélange comprenant en poids 1 à 100% d'au moins un polymère fluoré modifié pour respectivement 0 à 99% de polymère fluoré, la couche de polymère fluoré L3 comportant des particules d'oxydes mixtes est la couche électroactive,
■ et telle que si la couche de primaire L2 est absente alors le polymère fluoré L3 est un mélange comprenant en poids 1 à 100% d'au moins un polymère fluoré modifié pour respectivement 0 à 99% de polymère fluoré,
■ ledit polymère fluoré modifié étant choisi parmi :
   o les polymères fluorés greffés par un monomère insaturé, le greffage étant effectué irradiation du monomère insaturé et du polymère fluoré préalablement mélangés à l'état fondu,
   o les polymères fluorés irradiés en présence d'oxygène (aussi désignés par polymères fluorés oxydés).
■ Une électrode négative pour batterie lithium-ion selon la structure précédente dans laquelle le métal L1 est de préférence le cuivre, le primaire fluoré L2 éventuel est un mélange comprenant en poids 1 à 100% d'au moins un polymère fluoré modifié pour respectivement 0 à 99% de polymère fluoré, la couche de polymère fluoré L3 comportant des particules de carbone est la couche électroactive,
■ et telle que si la couche de primaire L2 est absente alors le polymère fluoré L3 est un mélange comprenant en poids 1 à 100% d'au moins un polymère fluoré modifié pour respectivement 0 à 99% de polymère fluoré,
■ ledit polymère fluoré modifié étant choisi parmi :
   o les polymères fluorés greffés par un monomère insaturé, le greffage étant effectué par irradiation du monomère insaturé et du polymère fluoré préalablement mélangés à l'état fondu,
   o les polymères fluorés irradiés en présence d'oxygène (aussi désignés par polymères fluorés oxydés).

Tout ce qui a été décrit plus haut concernant les polymères fluorés, les polymère fluorés modifiés, les proportions des constituants est valable pour les électrodes.

### [Exemples]

Dans les exemples on a utilisé les produits suivants
**Kynar®720 :** PVDF homopolymère fabriqué par ATOFINA de MFI (Melt Flow Index ou indice de fluidité à l'état fondu) 1 à 2 g/10 minutes sous une charge de 10 kg à 230°C.
**Kynar®761 :** PVDF homopolymère fabriqué par ATOFINA de MFI (Melt Flow Index ou indice de fluidité à l'état fondu) 2 à 4 g/10 minutes sous une charge de 12,5 kg à 230°C.
**Kynarflex®2801** : PVDF copolymère VF2-HFP (89% VF2 - 11 % HFP) fabriqué par ATOFINA de MVI (Melt Volume Index ou indice de fluidité volumique à l'état fondu) 0,5 cm3/ 10 minutes sous une charge de 5kg à 230°C (et de MFI de 3 à 8 g/10 minutes sous une charge de 12,5 kg à 230°C).
**Kynar®MKB :** il s'agit d'un Kynar®50 de MFI 1,6 (230°C, 5kg) traité par une étape de déshydrofluoration oxydante selon le mode opératoire de l'exemple 1 enseigné dans la demande EP 1054023 attribuée à la demanderesse.

### Exemple 1 : Préparation d'un PVDF greffé avec l'anhydride maléique.

On prépare un mélange d'un PVDF de la société ATOFINA (référence dans la Table 1) et d'anhydride maléique selon la teneur donnée dans le tableau 1.

**Tableau 1**

| Référence du mélange | Grade de PVDF | Teneur d'anhydride maléique en poids |
|---|---|---|
| 720-g-05 | Kynar® 720 | 0,5% |
| 761-g-05 | Kynar® 761 | 0,5 % |
| 761-g-10 | Kynar® 761 | 1 % |
| 761-g-20 | Kynar® 761 | 2 % |
| 2801-g-10 | Kynar Flex® 2801 | 1 % |

Ce mélange est préparé en utilisant une extrudeuse bi vis à 230°C et 150 tr/minute à un débit de 10 kg /h. Le produit ainsi préparé et ensaché dans des sacs étanches en aluminium. Ces sacs sont ensuite irradiés par irradiation gamma 50 kGray (5 Mrad (mégarad)). Un taux de greffage de 50% est déterminé, ce taux étant vérifié après un étape de solubilisation précipitation. Le produit PVDF-g-AM (dont la référence se trouve dans le tableau 1) est alors placé sous vide pendant une nuit à 130°C pour évacuer l'anhydride maléique résiduel et l'acide fluorhydrique libéré lors de l'irradiation.

### Exemple 2 : Préparation d'une électrode négative pour batterie lithium-ion.

On dissout 5 g de PVDF, modifié ou non, dans 85 g de N-methyl-2-pyrrolidone (abrégé par la suite « NMP » de MERCK, pureté > 99%) sous agitation magnétique à 55°C pendant au moins 30 minutes (jusqu'à 4 h pour les grades qui sont difficiles à dissoudre). On ajoute à cette solution 45 g de poudre de graphite MCMB 6-28 de granulométrie moyenne 6 µm obtenu chez OSAKA GAZ. Ces poudres sont dispersées dans la solution par agitation magnétique à température ambiante pendant 30 minutes, puis pendant 3 minutes dans un disperseur à turbine multipales de marque Dispermat et sous forte agitation (2000 tr/min). Cette solution est étalée sur une feuille de cuivre d'épaisseur 20 µm, puis un film est formé au moyen d'une racle manuelle Doctor Blade réglée à 400 µm. Le film est séché à 90°C dans une étuve ventilée pendant 15 minutes, puis à 140°C sous vide pendant une nuit. La couche conductrice ainsi formée sur la feuille de cuivre est ainsi composée de 10 % en poids de PVDF et de 90 % de graphite. Sa densité, ou « grammage », est de 1,2 g/cm² environ et son épaisseur de 120 µm en moyenne.

### Exemple 3 : Préparation d'une électrode positive pour batterie Li-ion.

On dissout 3 g de PVDF, modifié ou non, dans 62 g de NMP sous agitation magnétique à 55°C pendant au moins 30 minutes (jusqu'à 4 h pour les grades qui sont difficiles à dissoudre). On ajoute à cette solution 1,5 g de poudre de noir de carbone conducteur de type acétylène obtenu chez DENKA et 45,5 g de poudre de LiCoO₂ de granulométrie moyenne 5 µm obtenu chez UNION MINIERE. Ces poudres sont dispersées dans la solution par agitation magnétique à température ambiante pendant 30 minutes, puis pendant 3 minutes dans un disperseur à turbine multipales de marque Dispermat et sous forte agitation (2000 tr/min). Cette solution est étalée sur une feuille d'aluminium d'épaisseur 20 µm, puis un film est formé au moyen d'une racle manuelle Doctor Blade réglée à 350 µm. Le film est séché à 90°C dans une étuve ventilée pendant 15 minutes, puis à 140°C sous vide pendant une nuit. La couche conductrice ainsi formée sur la feuille d'aluminium est ainsi composée de 6 % en poids de PVDF, de 3 % de noir de carbone conducteur et de 91 % de LiCoO₂. Sa densité, ou « grammage », est de 1,9 g/cm² environ et son épaisseur de 120 µm en moyenne.

### Exemple 4 : Détermination des propriétés d'adhésion entre la couche conductrice (ou couche electroactive) et la feuille métallique.

Des bandes de largeur 25 mm et d'au moins 10 cm de longueur sont découpées dans l'assemblage décrit dans l'Exemple 2 ou dans l'Exemple 3 puis fixées sur un support métallique rigide par une bande adhésive double face (de marque TESA, référence #4970) de même largeur sur la face couche conductrice. L'assemblage est plaqué au support par simple pression de la main. L'ensemble support métallique rigide + adhésif double face + couche conductrice + feuille métallique est appelé « éprouvette de pelage ».

Les éprouvettes de pelage sont ensuite installées sur un dynamomètre DY30 distribué par ADAMEL LHOMARGY. Le support métallique est gardé fixe. La rupture entre la couche conductrice et la feuille d'aluminium ou de cuivre est amorcée soit à la main, soit au moyen d'une lame de rasoir. La partie libre de la feuille d'aluminium ou de cuivre est fixée à un mord mobile, puis est tiré à 180° avec une vitesse de traction de 100 mm/min. La force de traction instantanée est déterminée par une cellule de force utilisée de 10 N. La valeur moyenne de cette force pendant le pelage entre la feuille métallique et la couche conductrice est appelée « force de pelage ».

### Exemple comparatif 1 :

On utilise le Kynar® 761 ou le Kynar Flex® 2801 commercialisé par ATOFINA, ainsi que ces mêmes polymères modifiés comme suivant l'Exemple 1 (de référence 761-g-05, 761-g-10, 761-g-20 et 2801-g-20), pour former une électrode négative suivant l'Exemple 2. On utilise également des mélanges de différentes teneurs entre les polymères non modifiés (Kynar® 761 ou le Kynar Flex® 2801 ) et les polymères modifiés (de référence 761-g-05, 761-g-10, 761-g-20 et 2801-g-20) pour fabriquer des électrodes négatives suivant l'Exemple 2. On utilise enfin le PVDF homopolymère KF-1300 commercialisé par la société KUREHA (connu pour être un grade « standard » pour cette application) pour former une électrode négative suivant l'Exemple 2 et les comparer aux précédentes. En utilisant la méthode décrite dans l'Exemple 4, la force de pelage entre la couche conductrice et la feuille de cuivre peut être mesurée, et les résultats sont rassemblés dans le tableau suivant :

| **Liant** | **Force de pelage (g/25 mm)** |
|---|---|
| Kynar® 761 | 55 |
| Kynar Flex® 2801 | 80 |
| 761-g-05 | 235 |
| 761-g-10 | 390 |
| 761-g-20 | 470 |
| Kynar® 761 / 761-g-10 (80 / 20) | 220 |
| Kynar® 761 / 761-g-10 (50 / 50) | 280 |
| 2801-g-10 | 560 |
| Kynar Flex® 2801 / 2801-g-10 (80 / 20) | 305 |
| KF-1300 | 140 |

Ainsi, la modification de l'homopolymère PVDF ou du copolymère PVDF-HFP par le greffage de fonctions anhydride maléique apporte un surcroît d'adhésion par rapport à l'homopolymère PVDF ou au copolymère PVDF-HFP correspondant. Cela peut s'expliquer par le caractère polaire et réactif du groupement chimique anhydride maléique greffé ainsi sur les chaînes polymères de PVDF ou de PVDF-HFP selon la méthode décrite dans l'Exemple 1. De plus, l'homopolymère de PVDF qui est un liant de moyenne qualité, comme le Kynar® 761, peut voir ses propriétés d'adhésion largement améliorées par l'ajout d'une petite quantité d'un homopolymère PVDF modifié chimiquement selon l'Exemple 1. Ceci est également vrai pour un copolymère PVDF-HFP.

### Exemple comparatif 2 :

On utilise le Kynar® 761 ou le Kynar Flex® 2801 commercialisé par ATOFINA, ainsi que ces mêmes polymères modifiés comme suivant l'Exemple 1 (de référence 761-g-05, 761-g-10, 761-g-20 et 2801-g-20), pour former une électrode positive suivant l'Exemple 3. On utilise également des mélanges de différentes teneurs entre les polymères non modifiés (Kynar® 761 ou le Kynar Flex® 2801) et les polymères modifiés (de référence 761-g-05, 761-g-10, 761-g-20 et 2801-g-20) pour fabriquer des électrodes positives suivant l'Exemple 3. On utilise enfin le PVDF homopolymère KF-1300 commercialisé par la société KUREHA (connu pour être un grade « standard » pour cette application) pour former une électrode positive suivant l'Exemple 3 et les comparer aux précédentes. En utilisant la méthode décrite dans l'Exemple 4, la force de pelage entre la couche conductrice et la feuille d'aluminium peut être mesurée, et les résultats sont rassemblés dans le tableau suivant :

| **Liant** | **Force de pelage (g/25 mm)** |
|---|---|
| Kynar® 761 | 25 |
| Kynar Flex® 2801 | 35 |
| 761-g-05 | 90 |
| 761-g-10 | 160 |
| 761-g-20 | 200 |
| Kynar® 761 / 761-g-10 (80 / 20) | 65 |
| Kynar® 761 / 761-g-10 (50 / 50) | 90 |
| 2801-g-10 | 180 |
| Kynar Flex® 2801 / 2801-g-10 (80 / 20) | 75 |
| KF-1300 | 60 |

Ainsi, la modification de l'homopolymère PVDF ou du copolymère PVDF-HFP par le greffage de fonctions anhydride maléique apporte un surcroît d'adhésion par rapport à l'homopolymère PVDF ou au copolymère PVDF-HFP correspondant. Cela peut s'expliquer par le caractère polaire et réactif du groupement chimique anhydride maléique greffé ainsi sur les chaînes polymères de PVDF ou de PVDF-HFP selon la méthode décrite dans l'Exemple 1. De plus, l'homopolymère de PVDF qui est un liant de moyenne qualité, comme le Kynar® 761, peut voir ses propriétés d'adhésion largement améliorées par l'ajout d'une petite quantité d'un homopolymère PVDF modifié chimiquement selon l'Exemple 1. Ceci est également vrai pour un copolymère PVDF-HFP.

### Exemple comparatif 3 :

On utilise le Kynar® 761, le Kynar® MKB, ainsi que le polymère modifié 720-g-05 pour former une électrode positive suivant l'Exemple 3. On utilise aussi le PVDF KF-1300 commercialisé par la société KUREHA (connu pour être un grade « standard » pour cette application) pour former une électrode positive suivant l'Exemple 3 et les comparer aux précédentes. La force de pelage entre la couche conductrice et la feuille d'aluminium peut être mesurée, et les résultats sont rassemblés dans le tableau suivant :

| **Liant** | **Force de pelage (g/25 mm)** |
|---|---|
| Kynar® 761 | 106 |
| Kynar® MKB | 470 |
| 720-g-05 | 532 |
| KF-1300 | 470 |

On constate que les propriétés d'adhésion du 720-g-05 sont supérieures à celles du KF-1300. Ainsi, bien que le KF-1300 contienne une fonction polaire comme le polymère greffé selon l'invention 720-g-05, ce dernier présente de façon surprenante de meilleures propriétés d'adhésion.

## Revendications

1. Structure comprenant successivement :
■ une couche d'un métal L1, éventuellement un primaire fluoré L2 qui est un mélange comprenant en poids 1 à 100% d'au moins un polymère fluoré modifié pour respectivement 0 à 99% de polymère fluoré, et une couche d'un polymère fluoré L3,
■ telle que si la couche de primaire L2 est absente alors le polymère fluoré L3 est un mélange comprenant en poids 1 à 100% d'au moins un polymère fluoré modifié pour respectivement 0 à 99% de polymère fluoré,
■ ledit polymère fluoré modifié étant choisi parmi :
o les polymères fluorés greffés par un monomère insaturé, le greffage étant effectué par irradiation du monomère insaturé et du polymère fluoré préalablement mélangés à l'état fondu,
o les polymères fluorés irradiés en présence d'oxygène (aussi désignés par polymères fluorés oxydés).

2. Structure selon la revendication 1 dans laquelle le métal L1 est choisi parmi l'acier, l'acier inoxydable, l'aluminium, le cuivre, le nickel, le titane, le plomb, l'argent, le chrome et leurs différents alliages.

3. Structure selon l'une quelconque des revendications précédentes dans laquelle le polymère fluoré utilisé dans les couches L2 et L3 et qui n'est pas modifié est choisi parmi poly(fluorure de vinylidène) (PVDF) homopolymère ou copolymère.

4. Structure selon la revendication 3 dans laquelle le PVDF contient, en poids, au moins 50% de VDF.

5. Structure selon la revendication 4 dans laquelle le PVDF contient, en poids, au moins 85% de VDF.

6. Structure selon l'une quelconque des revendications 3 à 5 dans laquelle le comonomère dans le PVDF est avantageusement l'HFP.

7. Structure selon l'une quelconque des revendications précédentes dans laquelle le polymère fluoré greffé et le polymère fluoré oxydé sont préparés à partir de poly(fluorure de vinylidène) (PVDF) homopolymère ou copolymère.

8. Structure selon la revendication 7 dans laquelle le PVDF contient, en poids, au moins 50% de VDF.

9. Structure selon la revendication 8 dans laquelle le PVDF contient, en poids, au moins 85% de VDF.

10. Structure selon l'une quelconque des revendications 7 à 9 dans laquelle le comonomère dans le PVDF est avantageusement l'HFP.

11. Structure selon l'une quelconque des revendications précédentes dans laquelle le polymère fluoré greffé est préparé par un procédé de greffage d'un monomère insaturé sur le polymère fluoré dans lequel :
a) on mélange le polymère fluoré à l'état fondu avec le monomère insaturé,
b) le mélange obtenu en a) est mis sous forme de films, de plaques, de granulés ou de poudre,
c) les produits de l'étape b) sont soumis, en l'absence d'air, à une irradiation photonique (gamma) ou électronique (beta) sous une dose comprise entre 1 et 15 Mrad,
d) le produit obtenu en c) est éventuellement traité pour éliminer tout ou partie du monomère insaturé qui n'a pas été greffé sur le polymère fluoré.

12. Structure selon l'une quelconque des revendications précédentes dans laquelle le polymère fluoré oxydé est préparé par un procédé d'oxydation du polymère fluoré dans lequel :
a) le polymère fluoré est mis sous forme de films, de plaques, de granulés ou de poudre,
b) les produits de l'étape a) sont soumis, en présence d'oxygène, à une irradiation photonique (gamma) ou électronique (beta) sous une dose comprise entre 1 et 15 Mrad,
c) le produit obtenu en b) est éventuellement traité pour éliminer tout ou partie des impuretés sous produites.

13. Structure selon l'une quelconque des revendications précédentes dans laquelle le primaire fluoré L2 est un mélange comprenant en poids 10 à 90% d'au moins un polymère fluoré modifié pour respectivement 90 à 10% de polymère fluoré.

14. Structure selon la revendication 13 dans laquelle le primaire fluoré L2 est un mélange comprenant en poids 15 à 55% d'au moins un polymère fluoré modifié pour respectivement 85 à 45% de polymère fluoré.

15. Structure selon l'une quelconque des revendications précédentes dans laquelle le polymère fluoré de la couche L3 est un mélange comprenant en poids 10 à 90% d'au moins un polymère fluoré modifié pour respectivement 90 à 10% de polymère fluoré.

16. Structure selon la revendication 15 dans laquelle le polymère fluoré de la couche L3 est un mélange comprenant en poids 15 à 55% d'au moins un polymère fluoré modifié pour respectivement 85 à 45% de polymère fluoré.

17. Electrode positive pour batterie lithium-ion selon la structure de la revendication 1 dans laquelle le métal L1 est l'aluminium, le primaire fluoré L2 éventuel est un mélange comprenant en poids 1 à 100% d'au moins un polymère fluoré modifié pour respectivement 0 à 99% de polymère fluoré, la couche de polymère fluoré L3 comportant des particules d'oxydes mixtes est la couche électroactive,
■ et telle que si la couche de primaire L2 est absente alors le polymère fluoré L3 est un mélange comprenant en poids 1 à 100% d'au moins un polymère fluoré modifié pour respectivement 0 à 99% de polymère fluoré,
■ ledit polymère fluoré modifié étant choisi parmi :
■ les polymères fluorés greffés par un monomère insaturé, le greffage étant effectué par irradiation du monomère insaturé et du polymère fluoré préalabelment mélangés à l'état fondu,
■ les polymères fluorés irradiés en présence d'oxygène (aussi désignés par polymères fluorés oxydés).

18. Electrode négative pour batterie lithium-ion selon la structure de la revendication 1 dans laquelle le métal L1 est le cuivre, le primaire fluoré L2 éventuel est un mélange comprenant en poids 1 à 100% d'au moins un polymère fluoré modifié pour respectivement 0 à 99% de polymère fluoré, la couche de polymère fluoré L3 comportant des particules de carbone est la couche électroactive,
■ et telle que si la couche de primaire L2 est absente alors le polymère fluoré L3 est un mélange comprenant en poids 1 à 100% d'au moins un polymère fluoré modifié pour respectivement 0 à 99% de polymère fluoré,
■ ledit polymère fluoré modifié étant choisi parmi :
■ les polymères fluorés greffés par un monomère insaturé, le greffage étant effectué par irradiation du monomère insaturé et du polymère fluoré préalablement mélangés à l'état fondu,
■ les polymères fluorés irradiés en présence d'oxygène (aussi désignés par polymères fluorés oxydés).
